# FASCICULE DE BREVET EUROPEEN

(11) **EP 0 803 185 B1**
(45) Date de publication et mention de la délivrance du brevet: **07.11.2001**
(21) Numéro de dépôt: 97400936.7
(22) Date de dépôt: 24.04.1997
(51) Int. Cl.: A01G 3/02

(54) **Outil de coupe à main du type sécateur**
Handschneidgerät wie Heckenschere
Hand cutting tool of the secateur type

(30) Priorité: 26.04.1996 FR 9605300
(43) Date de publication de la demande: 29.10.1997
(73) Titulaire: Deville SA Sécateurs Pradines, 49150 Bauge (FR)
(72) Inventeur: Asselin, Arnaud, 49150 Bauge (FR); Foucher, Alain, 49150 Bauge (FR)
(74) Mandataire: Keib, Gérard

(56) Documents cités:
- EP-A- 0 394 851
- DE-A- 3 916 123
- DE-C- 718 773
- FR-A- 2 208 328
- FR-A- 2 499 358
- GB-A- 509 078
- GB-A- 191 027 620
- US-A- 2 632 245
- US-A- 3 596 355
- US-A- 3 839 794
- US-A- 5 074 046

## Description

La présente invention concerne un sécateur.

On connaît, d'après le US-A-2 632 245, un sécateur coupe-citrons constitué de deux bras montés de façon pivotante selon un mouvement relatif l'un par rapport à l'autre autour d'un axe de pivotement contre l'action d'un ressort, les deux bras comportant chacun d'un même côté de l'axe de pivotement un élément formant poignée et de l'autre côté dudit axe un élément de coupe comportant un bord de coupe, les deux éléments formant poignées définissant un plan de préhension comprenant un axe médian desdits éléments formant poignées, les bords de coupe définissant un plan de coupe, l'insertion du plan de préhension et du plan contenant ledit axe médian et perpendiculaire au plan de préhension, d'une part, et l'intersection du plan de coupe et dudit plan perpendiculaire, d'autre part, constituent deux droites faisant entre elles un angle dit angle d'inclinaison latérale, les bords de coupe étant déviés par rapport au plan de préhension vers la gauche pour un droitier et réciproquement.

Cet angle d'inclinaison latérale permet d'améliorer la position de coupe et de dégager la main de l'utilisateur de la zone de travail, et permet une coupe plus facile et plus efficace que dans le cas d'un outil de coupe à main du type sécateur classique, dans lequel le plan de coupe et le plan de préhension sont confondus, l'axe de pivotement étant perpendiculaire à ce plan.

Toutefois, un tel outil ne permet pas de faire face dans les meilleures conditions possibles à toutes les situations de coupe qui se présentent dans la réalité lors de la taille d'un arbuste tel qu'un rosier ou un pied de vigne.

L'expérience démontre en outre que l'utilisation intensive d'un tel outil provoque encore souvent des douleurs ou des pathologies dues aux contraintes biomécaniques agissant sur les systèmes osseux, musculaire, ligamentaire et nerveux d'un utilisateur.

On connaît par ailleurs, d'après le FR-A-2 208 328, un sécateur dans lequel un axe médian des éléments de coupe est situé dans le plan de préhension et est, dans ce plan, incliné vers le bas par rapport à un axe médian des poignées dudit outil.

Une telle structure d'outil améliore les conditions d'utilisation de cet outil.

Le but de la présente invention est de remédier aux inconvénients précités des sécateurs connus, et de proposer un sécateur du type précité dont l'utilisation soit plus simple et plus efficace, demande moins d'efforts musculaires, et provoque moins de douleurs et de pathologies, que celle d'un sécateur du type connu, en faisant notamment en sorte que, en cours d'utilisation, la partie active de l'outil constituée par les éléments de coupe se présente naturellement dans une position aussi voisine que possible de la position idéale, et que la main de l'utilisateur se trouve dégagée de la zone de travail.

Suivant l'invention, le sécateur du type précité est caractérisé en ce que la projection d'un axe médian des bords de coupe sur le plan de préhension fait avec l'axe médian des éléments formant poignées un angle vers le bas dit angle d'inclinaison dans le plan sagittal.

La Demanderesse a en effet constaté, au cours de campagnes d'essais systématiques qu'elle a entrepris, que, de façon imprévisible et tout à fait surprenante, la combinaison des deux inclinaisons précitées de l'axe médian des bords de coupe par rapport à l'axe médian des poignées, respectivement une inclinaison latérale et une inclinaison dans le plan sagittal, provoquait un effet de synergie et permettait d'obtenir des résultats meilleurs que ceux obtenus dans le cas d'une seule de ces deux inclinaisons, tant sur le plan du confort et de la facilité des manoeuvres de coupe que sur le plan de la vitesse de coupe pour une fatigue moindre.

D'autres particularités et avantages de l'invention apparaîtront dans la description ci-après.

Aux dessins annexés, donnés uniquement à titre d'exemples non limitatifs :
- la figure 1 est une vue schématique en élévation d'un outil de coupe à main du type sécateur classique ;
- la figure 2 est une vue schématique en perspective illustrant un outil de coupe à main présentant un angle d'inclinaison latérale vers la gauche, l'outil étant tenu par une main droite ;
- la figure 3 est un schéma géométrique illustrant la structure de l'outil de la figure 2 ;
- la figure 4 est une vue semblable à la figure 2 d'un outil de coupe à main présentant un autre type d'inclinaison ;
- la figure 5 est une vue semblable à la figure 3 illustrant l'outil de la figure 4 ;
- la figure 6 est une vue semblable à la figure 2 d'un outil de coupe à main présentant une inclinaison dans le plan sagittal ;
- la figure 7 est une vue semblable à la figure 3 illustrant l'outil de la figure 6 ;
- la figure 8 est une vue schématique de dessus de l'outil de la figure 2 en cours d'utilisation ;
- la figure 9 est une vue semblable à la figure 8 d'une variante de l'outil de la figure 8 ;
- la figure 10 est une vue semblable à la figure 6 d'un mode de réalisation de la présente invention ;
- la figure 11 est une vue semblable à la figure 3 illustrant l'outil de la figure 10 ;
- les figures 12 à 14 sont des courbes indiquant l'angle moyen de flexion du poignet et l'angle moyen de déviation du poignet pour différentes valeurs et différents sens d'inclinaison des éléments de coupe ;
- les figures 15 et 16 sont des courbes représentant l'influence de l'inclinaison des éléments de coupe sur la vitesse de coupe.

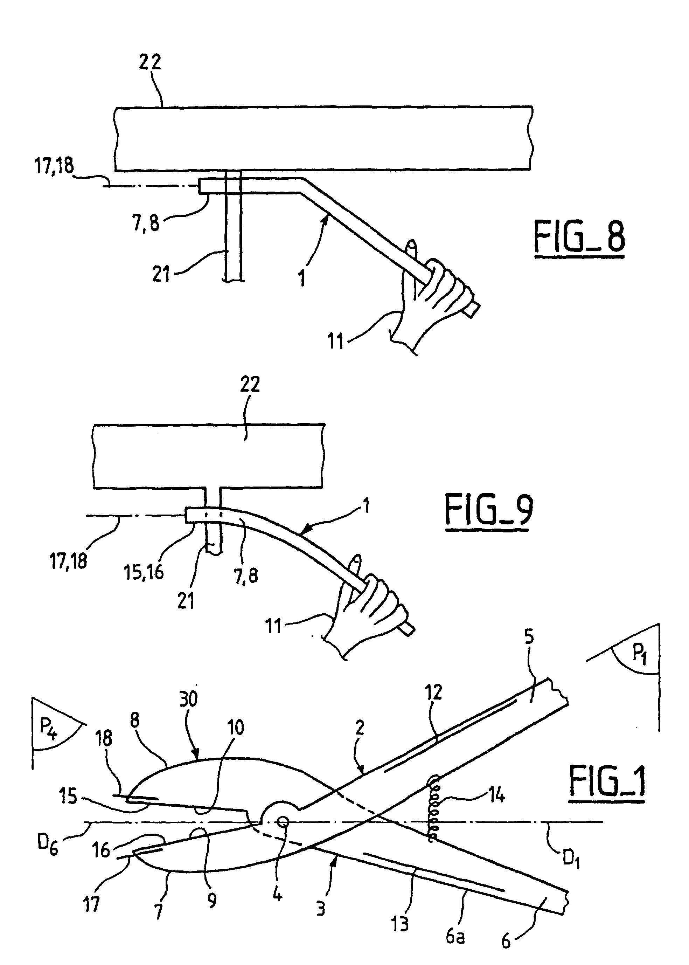

Dans le mode de réalisation représenté à la figure 1, l'outil de coupe à main du type sécateur classique 30 est constitué de deux bras 2,3 montés de façon pivotante selon un mouvement relatif l'un par rapport à l'autre autour d'un axe de pivotement 4 à la manière de ciseaux. Les deux bras 2,3 comportent chacun d'un même côté de l'axe de pivotement 4 un élément formant poignée 5,6 et de l'autre côté dudit axe 4 un élément de coupe 7,8 comportant un bord de coupe 9,10. Les deux éléments formant poignées 5,6 sont adaptés à être tenus d'une seule main 11 par un utilisateur en des zones de préhension respectives assimilables à des segments de droite 12,13 mobiles l'un par rapport à l'autre sensiblement dans un plan de préhension P1 lorsqu'on rapproche les deux éléments formant poignées 5,6 l'un de l'autre contre l'action d'un ressort 14 pour actionner l'outil de coupe 1, ou lorsqu'on relâche lesdits éléments formant poignées 5,6. Les bords de coupe 9,10 des éléments de coupe 7,8 sont assimilables, au moins près de leur extrémité libre 15,16 éloignée de l'axe de pivotement 4, à des segments de droite 17,18 mobiles l'un par rapport à l'autre sensiblement dans un plan de coupe P4 lorsqu'on actionne l'outil 1. Le plan de préhension P1 comprend un axe médian D1 des éléments formant poignées 5,6.

Dans cet exemple, le plan de préhension P1 et le plan de coupe P4 sont confondus avec le plan de la figure, l'axe 4 de pivotement étant perpendiculaire à ce plan P1,P4. Les segments de droite 12,13 sont sensiblement confondus respectivement avec un bord supérieur de la poignée 5 et un bord inférieur de la poignée 6. Les segments de droite 17,18 sont sensiblement confondus avec les bords de coupe 15,16.

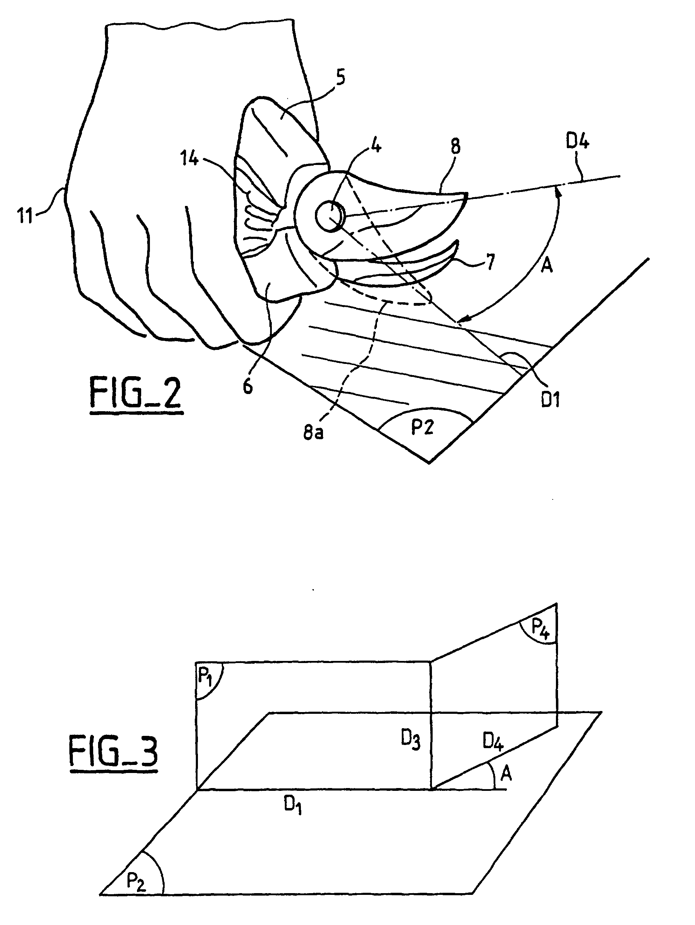

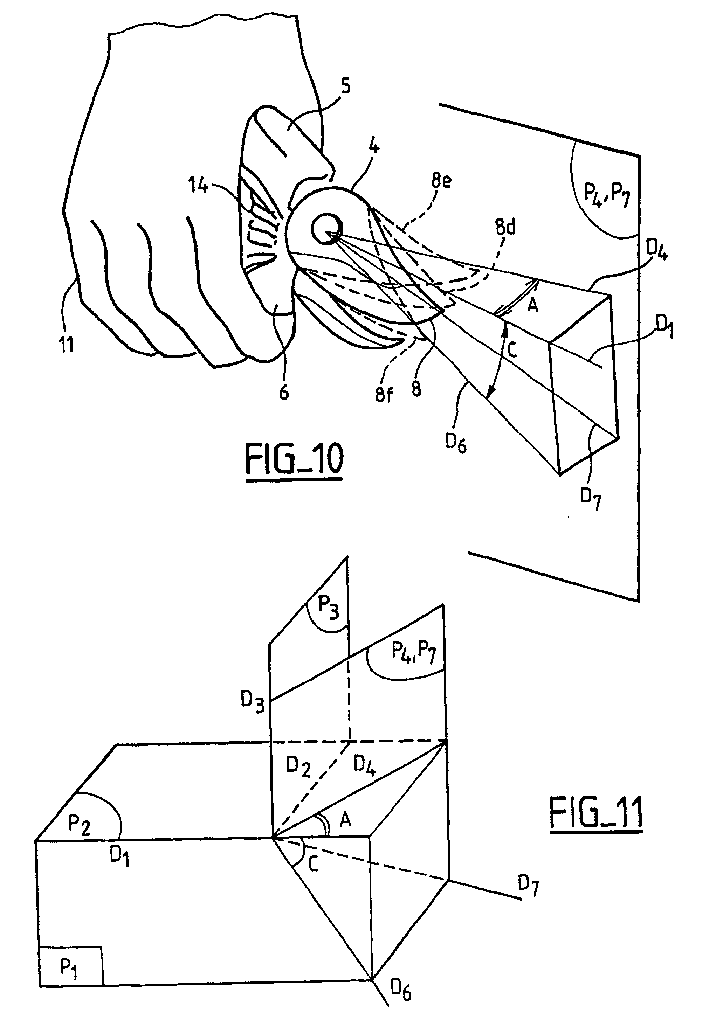

Les éléments de coupe sont des éléments de coupe quelconques, et peuvent être constitués par exemple de deux mors de serrage, ou de deux lames, ou d'une lame et d'une contre-lame. Les bords de coupe des lames peuvent être rectilignes, mais peuvent également être courbes, comme représenté aux figures 2,4 et 6. Dans ce cas, les bords de coupe 9,10 peuvent être assimilés à des segments de droite au moins près de leur extrémité libre éloignée de l'axe de pivotement 4 (Voir figure 9).

On utilisera ci-après les mêmes numéros et signes de référence pour tous les éléments énumérés cidessus qui se retrouvent dans les divers modes de réalisation de la présente invention que l'on va maintenant décrire.

Dans le mode de réalisation représenté aux figures 2 et 3, les deux droites D1,D4 constituant respectivement l'intersection du plan de préhension P1, d'une part, du plan de coupe P4, d'autre part, et du plan P2 contenant ledit axe médian D1 et perpendiculaire au plan de préhension P1, font entre elles un angle dit angle A d'inclinaison latérale.

On a représenté en tirets en 8a la position qu'aurait occupée l'élément de coupe 8 dans un outil classique.

L'on a choisi de représenter, aux figures 2 et 3, le plan de préhension P1 selon un plan vertical ; dans cet exemple, l'axe médian D1 est horizontal, et il en est de même pour le plan P2.

On voit que l'on a fait pivoter le plan de coupe P4 par rapport au plan P1 autour de la verticale D3. Dans le cas simple représenté, l'angle A est appelé angle d'inclinaison latérale et peut être mesuré dans le plan horizontal P2.

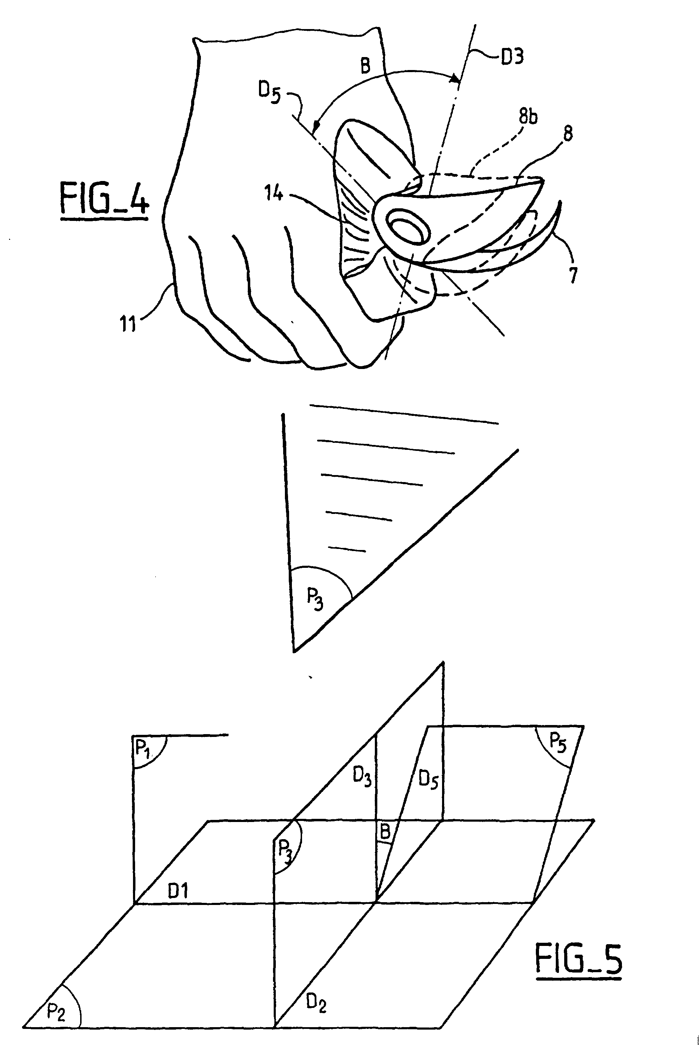

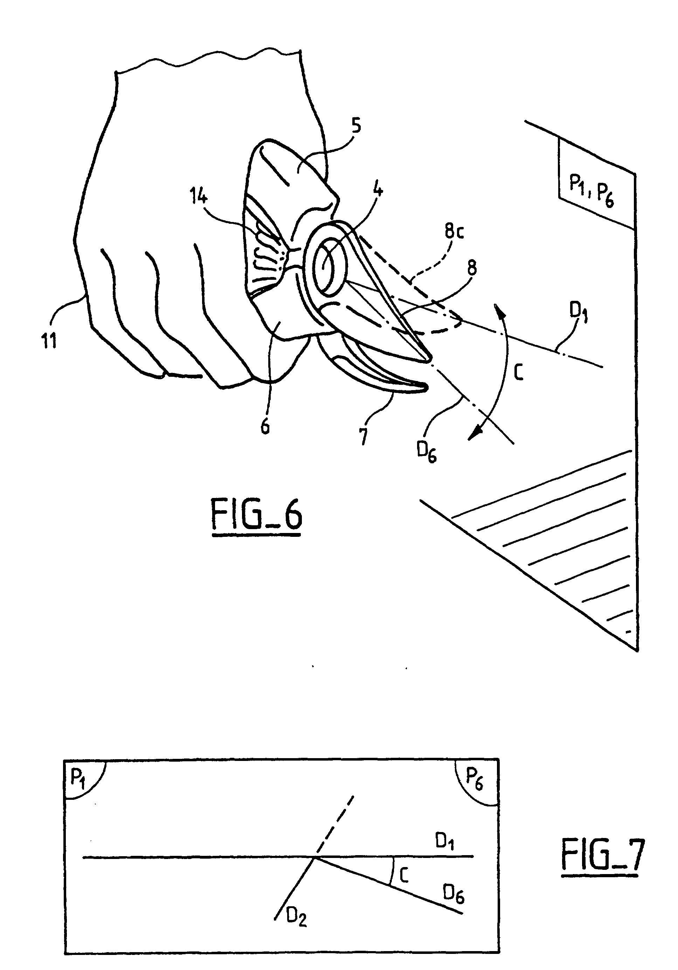

Dans le mode de réalisation représenté aux figures 4 et 5, les deux droites D3,D5 constituant respectivement l'intersection du plan de préhension P1, d'une part, du plan de coupe P5, d'autre part, et d'un plan P3 perpendiculaire audit axe médian D1 des éléments formant poignées 5,6, font entre elles un angle dit angle B d'inclinaison selon un plan frontal P3.

On a représenté en 8b en tirets la position qu'aurait occupée l'élément de coupe 8 dans un outil classique sans inclinaison du plan de coupe.

On a représenté de même le plan de préhension P1 selon un plan vertical.

On voit que l'on a fait pivoter le plan de coupe P5 par rapport au plan P1 autour de la droite D1. Dans le cas simple représenté, l'angle B peut être mesuré dans le plan P3 dit plan frontal. L'angle B est appelé angle B d'inclinaison dans le plan frontal.

De façon surprenante, chacune des deux inclinaisons que l'on vient de décrire améliore la position de coupe de l'outil par rapport à un outil de coupe classique, diminue l'effort musculaire nécessaire pour une opération de coupe, et rend une telle opération plus simple et plus efficace.

Bien entendu, on peut utiliser l'une ou l'autre de ces deux inclinaisons dans un outil de coupe, mais on peut également combiner ces deux inclinaisons sur un même outil.

Dans le mode de réalisation représenté aux figures 6 et 7, la projection D6 d'un axe médian D7 des bords de coupe 9,10 sur le plan de préhension P1 fait avec l'axe médian D1 des éléments formant poignées 5,6 un angle dit angle C d'inclinaison dans le plan sagittal.

On a représenté en tirets en 8c la position qu'aurait occupée l'élément de coupe 8 dans un outil de coupe classique.

On a représenté de même le plan de préhension P1 selon un plan vertical.

Dans le cas simple représenté, et en l'absence de toute autre inclinaison, le plan P6 de coupe est confondu avec le plan P1, l'axe médian D7 des bords de coupe 9,10 est situé dans ce plan P1 et est donc confondu avec sa projection D6 sur ce plan P1.

On voit que l'on a simplement fait pivoter D6 par rapport à D1 autour de la droite D2, vers le bas pour un utilisateur tenant l'outil.

L'angle C est ainsi appelé angle C d'inclinaison dans le plan sagittal et peut être mesuré dans le plan vertical P1.

Cette inclinaison C peut être utilisée en combinaison avec l'une ou l'autre ou la combinaison des deux inclinaisons A et B précitées.

On a représenté schématiquement à la figure 8 un outil selon le mode de réalisation des figures 2 et 3. Cet outil est un outil de droitier, tenu par une main droite 11.

On voit que pour couper une branche secondaire 21 partant d'une branche principale 22 qui doit rester en place, l'outil a une excellente position de coupe, la main est dans une position naturelle qui n'est pas susceptible d'engendrer des douleurs ou pathologies, et la main et les doigts de l'utilisateur sont dégagés de la zone de travail et ne peuvent être ni gênés ni blessés par les branches 21,22.

Dans cet outil pour droitier, le plan de coupe P4 est incliné par rapport au plan de préhension P1 vers la gauche de l'utilisateur de l'outil.

Dans la réalisation de la figure 9, on a représenté un outil dont les bords de coupe 9,10 sont courbés. Ce n'est qu'au voisinage de leur extrémité libre 15,16 éloignée de l'axe de pivotement 4 que ces bords de coupe peuvent être assimilables à des segments de droite 17,18.

L'outil selon le mode de réalisation des figures 2 et 3 peut être adapté à être actionné soit par un droitier, soit par un gaucher. Dans un tel cas, l'intersection D4 du plan de coupe P4 et dudit plan P2 perpendiculaire au plan de préhension P1 et contenant l'axe médian D1 des éléments formant poignées 5,6 est inclinée par rapport audit axe médian D1 vers la droite ou vers la gauche d'un utilisateur de l'outil 1 suivant que l'outil 1 est un outil pour gaucher ou un outil pour droitier.

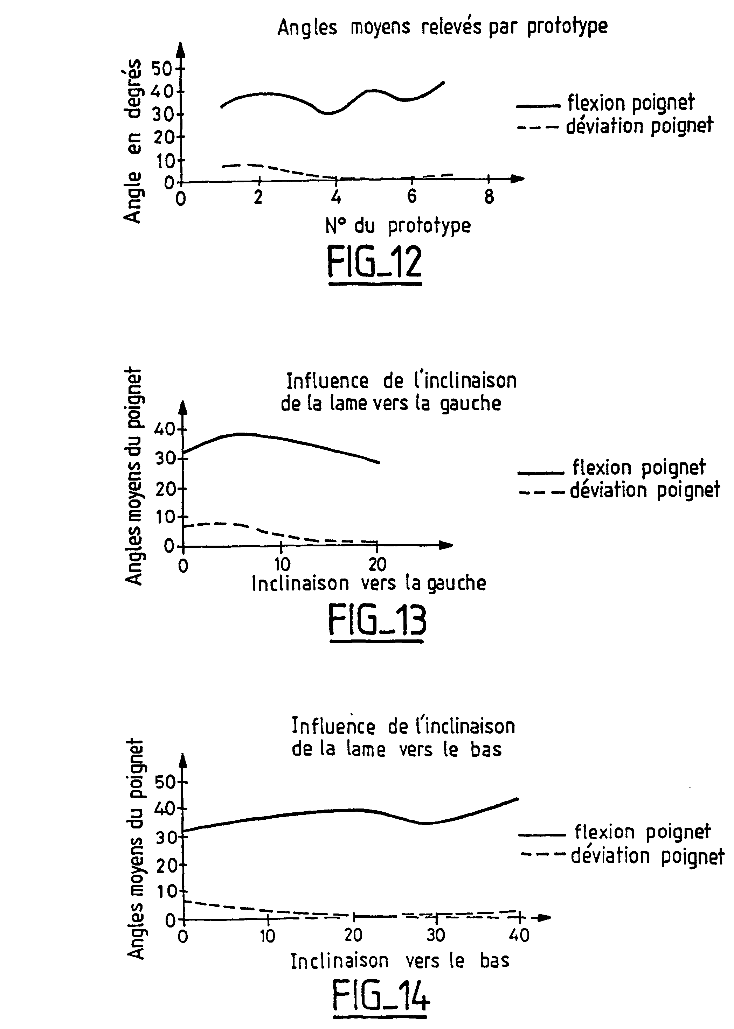

Dans le mode de réalisation des figures 10 et 11, l'axe médian D7 des bords de coupe est contenu dans un plan de coupe P7 qui est confondu avec le plan de coupe P4 des figures 2 et 3.

Le plan P7 coupe le plan P2 selon la droite D4 qui est la projection de D7 sur le plan P2 parallèlement à D3.

Comme on l'a vu pour le mode de réalisation des figures 2 et 3, les droites D1 et D4 font entre elles un angle A dit angle d'inclinaison latérale, D4 étant inclinée par rapport à D1 dans le sens antihoraire dans le mode de réalisation représenté qui correspond à un outil pour droitier.

En outre, et comme dans le cas simple schématisé à la figure 7, la projection D6 de D7 sur le plan de préhension P1 parallèlement à D2 fait avec D1 un angle C dit angle d'inclinaison dans le plan sagittal.

On a représenté en traits pleins à la figure 10 la position de l'élément de coupe 8 présentant ces deux inclinaisons A et C. On a également schématisé en tirets à cette figure les positions 8d, 8e et 8f de cet élément de coupe présentant respectivement la position sans aucune inclinaison, la position avec inclinaison latérale A seule, et la position avec inclinaison C dans le plan sagittal seule.

Dans cet outil, l'angle A d'inclinaison latérale, vers la gauche pour un droitier et réciproquement, a une valeur comprise avantageusement entre 5° et 40°, de préférence entre 5 et 15°.

Dans ce même outil, l'angle C d'inclinaison dans le plan sagittal a une valeur comprise avantageusement entre 5° et 50°, de préférence entre 10° et 30°, cette inclinaison étant dirigée vers le bas.

Au cours d'essais systématiques qu'elle a entrepris, la Demanderesse a mis en évidence que la combinaison d'un angle d'inclinaison latérale et d'un angle d'inclinaison dans le plan sagittal présente un effet de synergie inattendu et surprenant.

La Demanderesse a ainsi, dans une première série d'essais, testé sept sécateurs numérotés de 1 à 7. le sécateur 1 ne présentait aucune inclinaison de l'axe médian des bords de coupe par rapport à l'axe médian des poignées.

Les sécateurs 2 à 4 présentaient chacun un angle d'inclinaison latérale vers la gauche différent. Les sécateurs 5 à 7 présentaient chacun un angle d'inclinaison différent dans le plan sagittal, vers le bas.

Pour chaque sécateur, la Demanderesse a mesuré l'angle moyen de flexion du poignet et l'angle moyen d'inclinaison du poignet. La flexion du poignet est le mouvement de pivotement vers le bas autour de l'axe transversal horizontal du poignet lorsque la main est posée à plat sur un plan horizontal. Le mouvement de pivotement du poignet vers le haut autour du même axe transversal horizontal est appelé extension du poignet. La déviation du poignet est le pivotement autour d'un axe vertical médian du poignet, vers la droite ou vers la gauche, la main restant posée sur ce plan horizontal. Pour une main droite, la déviation vers la droite est appelée déviation cubitale et la déviation vers la gauche est appelée déviation radiale.

Pour chaque sécateur la Demanderesse a également mesuré une vitesse moyenne relative de coupe, la vitesse moyenne relative de coupe étant exprimée sous la forme d'un nombre décimal sans dimension, qui est le rapport entre un temps prédéterminé représentant un temps moyen standard pour une coupe, et un temps moyen pour une coupe effectuée avec l'un des sécateurs, testés 1 à 7.

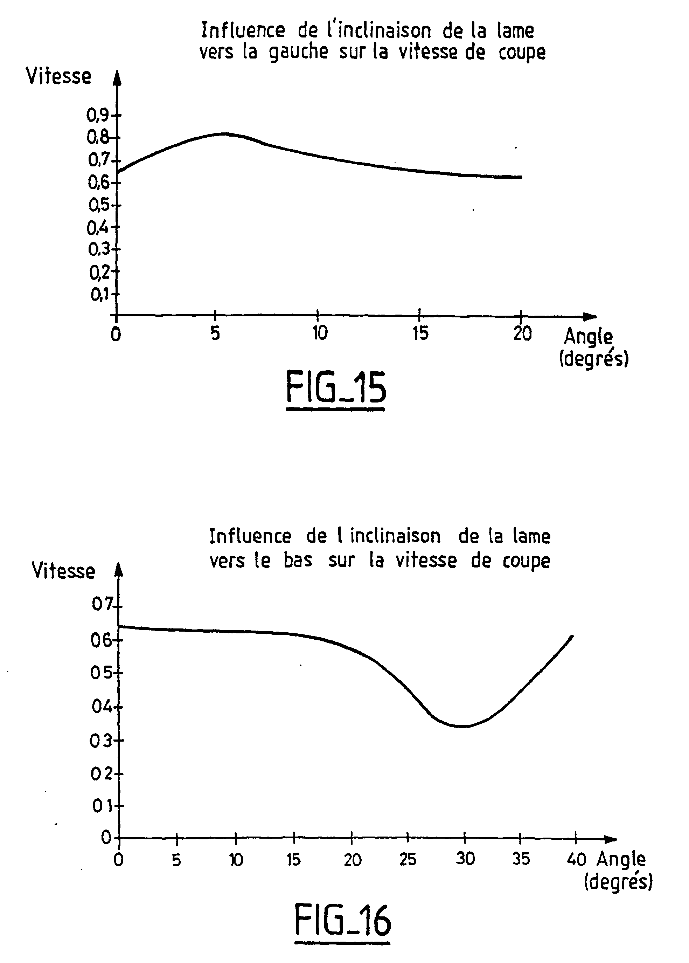

Les résultats obtenus sont résumés dans le tableau ci-dessous et illustrés aux figures 12 à 16.

| Numéro du sécateur | Inclinaison latérale A vers la gauche (degrés) | Inclinaison C vers le bas (degrés) | Flexion poignet Angle moyen (degrés) | Déviation poignet Angle moyen (degrés) | Vitesse moyenne de coupe |
|---|---|---|---|---|---|
| 1 | 0 | 0 | 32,34 | 6,53 | 0,64 |
| 2 | 5 | 0 | 38,09 | 7,38 | 0,82 |
| 3 | 10 | 0 | 36,25 | 3,12 | 0,71 |
| 4 | 20 | 0 | 28,68 | 1,42 | 0,83 |
| 5 | 0 | 20 | 38,76 | 0,79 | 0,34 |
| 6 | 0 | 30 | 33,9 | 1,54 | 0,57 |
| 7 | 0 | 40 | 42,17 | 1,53 | 0,60 |

On voit clairement que la flexion et la déviation du poignet sont réduites pour des sécateurs présentant une inclinaison de la lame vers la gauche, et que la déviation du poignet est réduite pour des sécateurs présentant une certaine inclinaison de la lame vers le bas. Ces résultats sont satisfaisants dans la mesure où ces positions sont sources de syndromes et pathologies concernant à la fois les muscles et le squelette.

On remarque également que l'inclinaison vers la gauche du sécateur a un effet combiné sur la flexion et la déviation du poignet, et que l'inclinaison verticale vers le bas de la lame, (dans une plage d'angle de 20 à 30°), réduit la déviation du poignet et n'engendre pas plus de flexion que le sécateur 1 sans inclinaison.

Autre résultat intéressant, l'inclinaison latérale de la lame augmente la vitesse d'utilisation du sécateur et permet de contrebalancer le ralentissement dû à l'inclinaison de la lame vers le bas (ralentissement qui disparaît en outre après une période d'accommodation brève, de l'ordre d'une heure).

Ces résultats démontrent l'intérêt de combiner sur un même sécateur une inclinaison latérale et une inclinaison vers le bas de la lame.

La Demanderesse a entrepris une autre campagne d'essais systématiques pour illustrer l'effet de synergie obtenu en combinant ces deux inclinaisons sur un sécateur, par comparaison avec un sécateur classique sans inclinaison.

Les premiers essais montrent que les pourcentages du temps de coupe passé avec le poignet en extension avec un angle d'extension important supérieur à 20°, sont comparables pour les deux outils et pour les bois fins (diamètre inférieur à 20 mm), de l'ordre de 30% environ, et sont un peu supérieurs pour l'outil à deux inclinaisons dans le cas des bois épais.

Les positions en extension ne sont pas celles générant le plus de syndromes et de pathologies.

Le pourcentage du temps passé avec le poignet en flexion passe de 30% environ, pour le sécateur classique, à des valeurs, pour le sécateur à deux inclinaisons, de l'ordre de 20% pour les bois fins et de 10% pour les bois épais, pour lesquels le poignet est le plus sollicité et soumis à la fatigue.

De même, le pourcentage du temps de coupe passé avec le poignet en déviation cubitale est réduit pour le sécateur à deux inclinaisons, respectivement de 25% environ pour les bois épais et de 40% environ pour les bois fins.

Tout ce qui précède montre que la combinaison sur un même outil d'une inclinaison latérale A et d'une inclinaison C dans le plan sagittal permet de combiner, en les améliorant, les avantages respectifs de ces deux inclinaisons, tout en limitant ou en réduisant les inconvénients de celles-ci.

Suivant une variante non représentée, l'outil est en outre conçu de manière telle que le plan de coupe présente par rapport au plan de préhension P1 un angle B d'inclinaison dans le plan frontal P3. ce perfectionnement permet d'apporter une aisance supplémentaire dans certains cas d'utilisation de l'outil, notamment lors du travail sur une branche sensiblement horizontale.

L'outil de coupe est avantageusement configuré de façon que les positions des zones de préhension 12, 13 des poignées 5, 6 dans les positions ouverte et fermée de l'outil correspondent respectivement sensiblement aux positions ouverte aux deux tiers environ et ouverte d'un tiers environ de la main d'un utilisateur.

On sait que c'est entre ces deux positions ouverte d'un tiers et ouverte aux deux tiers environ que l'utilisateur d'un sécateur développe l'effort maximum avec le minimum de fatigue et de risque.

De même, l'utilisation de l'outil est facilitée dès lors que la partie inférieure 6a de la poignée inférieure 6 a une forme de section sensiblement semi-circulaire.

Cette forme permet aux doigts de glisser sur cette partie inférieure qui agit à la manière d'une poignée tournante et assure un massage local en évitant la compression locale des vaisseaux sanguins et des tendons susceptible d'entraîner une insensibilisation des doigts.

On donne également à la partie supérieure de la poignée supérieure une forme courbe déterminée de façon que la poignée n'appuie pas sur la région du canal carpien de la main tenant l'outil.

Dans tout ce qui précède, l'inclinaison relative des éléments de préhension et des éléments actifs de coupe les uns par rapport aux autres peut être due indifféremment à une inclinaison au niveau des éléments actifs de coupe (éléments actifs pliés ou de forme coudée), à une inclinaison au niveau de la jonction entre les éléments actifs de coupe et les éléments de préhension (par exemple, fixation inclinée), ou à une inclinaison au niveau des éléments de préhension (par exemple poignées tordues).

Selon le type d'outil, les valeurs des angles d'inclinaison peuvent être déterminées lors de la fabrication de l'outil, ou l'outil peut comporter des moyens pour permettre à un utilisateur de l'outil de régler à volonté ces valeurs.

En outre, il est toujours facile de déterminer l'axe médian D1 des éléments formant poignées 5, 6, à partir notamment des positions de ces éléments 5, 6 dans la position fermée de l'outil 30.

Il en est de même pour l'axe médian D6 ou D7 des bords de coupe 9, 10 à partir de la position de ces bords 9, 10 dans la position fermée de l'outil 30.

Pour chaque type d'outil, on adapte évidemment la valeur de chaque inclinaison à la structure et à la forme de l'outil et de ses organes constitutifs.

On a ainsi décrit un outil de coupe du type sécateur particulièrement bien adapté à la morphologie et à l'anatomie de la main d'un utilisateur, et dont la structure et la forme ont été particulièrement étudiées sur le plan ergonomique pour faciliter le travail et améliorer les conditions d'utilisation de cet outil.

Bien entendu, la présente invention n'est pas limitée aux modes de réalisation que l'on vient de décrire, et on peut apporter à ceux-ci de nombreux changements et modifications sans sortir du domaine de l'invention.

Ainsi, l'invention s'applique également aux sécateurs assistés de façon électronique, électrique, hydraulique et pneumatique.

## Revendications

1. Sécateur (1), constitué de deux bras (2,3) montés de façon pivotante selon un mouvement relatif l'un par rapport à l'autre autour d'un axe de pivotement (4) contre l'action d'un ressort (14), les deux bras (2,3) comportant chacun d'un même côté de l'axe de pivotement (4) un élément formant poignée (5,6) et de l'autre côté dudit axe (4) un élément de coupe (7,8) comportant un bord de coupe (9,10), les deux éléments formant poignées (5,6) définissant un plan de préhension (P1) comprenant un axe médian (D1) desdits éléments formant poignées (5, 6), les bords de coupe (9, 10) définissant un plan de coupe (P4, P7), l'intersection du plan de préhension (P1) et du plan (P2) contenant ledit axe médian (D1) et perpendiculaire au plan de préhension (P1), d'une part, et l'intersection du plan de coupe (D4) et dudit plan (P2), d'autre part, constituant deux droites (D1, D4) faisant entre elles un angle (A) dit angle d'inclinaison latérale, les bords de coupe (9, 10) étant déviés par rapport au plan de préhension (P1) vers la gauche pour un droitier et réciproquement, **caractérisé en ce que** la projection (D6) d'un axe médian (D7) des bords de coupe (9,10) sur le plan de préhension (P1) fait avec l'axe médian (D1) des éléments formant poignées (5,6) un angle dirigé vers le bas dit angle (C) d'inclinaison dans le plan sagittal.

2. Sécateur selon la revendication 1,
**caractérisé en ce que** l'angle d'inclinaison latérale (A) a une valeur comprise entre 5° et 40°, de préférence entre 5 et 15° environ.

3. Sécateur selon la revendication 1 ou 2,
**caractérisé en ce que** l'angle (C) d'inclinaison dans le plan sagittal a une valeur comprise entre 5° et 50°, de préférence entre 10° et 30°.

4. Sécateur selon l'une des revendications précédentes, **caractérisé en ce que** le plan de coupe présente en outre par rapport au plan de préhension (P1) un angle (B) d'inclinaison dans le plan frontal (P3).

5. Sécateur selon l'une des revendications précédentes, **caractérisé en ce qu'**il est configuré de façon que les positions des zones de préhension (12, 13) des poignées (5, 6) dans les positions ouverte et fermée de l'outil correspondent respectivement sensiblement aux positions ouverte aux deux tiers et ouverte d'un tiers de la main d'un utilisateur.

6. Sécateur selon l'une des revendications précédentes, **caractérisé en ce que** la partie inférieure (6a) de la poignée inférieure (6) a une forme de section sensiblement semi-circulaire.

## Patentansprüche

1. Gartenschere (1), die aus zwei Armen (2,3) gebildet ist, welche schwenkbar gemäß einer relativen Bewegung zueinander um eine Schwenkachse (4) gegen die Wirkung einer Feder (14) angebracht sind, wobei die beiden Arme (2,3) jeweils auf der gleichen Seite der Schwenkachse (4) ein griffbildendes Element (5,6) und auf der anderen Seite der Achse (4) ein Schneidelement (7, 8) mit einer Schneidkante (9,10) umfassen, wobei die beiden griffbildenden Elemente (5,6) eine Greifebene (P1) mit einer Mittelachse (D1) der griffbildenden Elemente (5,6) definieren, wobei die Schneidkanten (9,10) eine Schneidebene (P4, P7) definieren, wobei einerseits der Schnittpunkt der Greifebene (P1) mit der die Mittelachse (D1) enthaltenden Ebene (P2), die senkrecht zu der Greifebene (P1) liegt, und andererseits der Schnittpunkt der Schneidebene (P4) mit der Ebene (P2) zwei Geraden (D1, D4) bilden, welche zwischen sich einen Winkel (A), den sogenannten seitlichen Neigungswinkel, ausbilden, wobei die Schneidkanten (9,10) bezüglich der Greifebene (P1) nach links für einen Rechtshänder und umgekehrt abgelenkt sind, **dadurch gekennzeichnet, daß** die Projektion (D6) einer Mittelachse (D7) der Schneidkanten (9,10) auf der Greifebene (P1) mit der Mittelachse (D1) der griffbildenden Elemente (5,6) einen nach unten gerichteten Winkel, den sogenannten Neigungswinkel (C) in der pfeilrechten Ebene, bildet.

2. Gartenschere gemäß Anspruch 1, **dadurch gekennzeichnet, daß** der seitliche Neigungswinkel (A) einen Wert zwischen 5° und 40°, vorzugsweise zwischen ungefähr 5 und 15° aufweist.

3. Gartenschere gemäß Anspruch 1 oder 2, **dadurch gekennzeichnet, daß** der Neigungswinkel (C) in der pfeilrechten Ebene einen Wert zwischen 5° und 50°, vorzugsweise zwischen 10° und 30° aufweist.

4. Gartenschere gemäß einem der vorherigen Ansprüche, **dadurch gekennzeichnet. daß** die Schneidebene außerdem bezüglich der Greifebene (P1) einen Neigungswinkel (B) in der Frontalebene (P3) aufweist.

5. Gartenschere gemäß einem der vorherigen Ansprüche, **dadurch gekennzeichnet. daß** sie derart konfiguriert ist, daß die Positionen der Greifbereiche (12,13) der Griffe (5,6) in der offenen und geschlossenen Position des Werkzeugs jeweils praktisch der zu Zweidrittel offenen und der zu einem Drittel offenen Position der Hand eines Benutzers entsprechen.

6. Gartenschere gemäß einem der vorherigen Ansprüche, **dadurch gekennzeichnet, daß** der untere Bereich (6a) des unteren Griffs (6) eine praktisch halbkreisförmige Querschnitsform aufweist.

## Claims

1. Secateurs (1) consisting of two arms (2,3) mounted to pivot relatively to one another about a pivot axis (4) against the action of a spring (14), the two arms (2,3) each comprising on the same side of the pivot axis (4) an element which forms a handle (5,6) and on the other side of said axis (4) a cutting element (7,8) comprising a cutting edge (9,10), the two handle-forming elements (5,6) defining a gripping plane (P1) containing a central axis (D1) of the said handle-forming elements (5,6), the cutting edges (9,10) defining a cutting plane (P4,P7), the intersection of the gripping plane (P1) and of the plane (P2) containing the said central axis (D1) and perpendicular to the gripping plane (P1), on the one hand, and the intersection of the cutting plane (D4) and of the said plane (P2), on the other hand, constituting two straight lines (D1,D4) forming between them an angle (A) termed the angle of lateral inclination, the cutting edges (9,10) being offset from the gripping plane (P1) to the left for a right-handed user and vice-versa, **characterised in that** the projection (D6) of a central axis (D7) of the cutting edges (9,10) on the gripping plane (P1) forms with the central axis (D1) of the handle-forming elements (5,6) an angle directed downwardly and termed the angle of inclination (C) in the sagittal plane.

2. Secateurs according to claim 1, **characterised in that** the angle of lateral inclination (A) has a value of between 5° and 40°, preferably between approximately 5° degrees and 15°.

3. Secateurs according to claim 1 or 2, **characterised in that** the angle of inclination (C) in the sagittal plane has a value of between 5° and 50°, preferably between 10° and 30°.

4. Secateurs according to any of the preceding claims, **characterised in that** the cutting plane also has, with respect to the gripping plane (P1), an angle of inclination (B) in the frontal plane (P3).

5. Secateurs according to any of the preceding claims, **characterised in that** the secateurs are configured in such manner that the positions of the gripping zones (12,13) of the handles (5,6) in the open and closed positions of the tool correspond respectively substantially to the two-thirds open position and one-third open position of a user's hand.

6. Secateurs to any of the preceding claims, **characterised in that** the bottom part (6a) of the lower handle (6) has a substantially semi-circular sectional shape.
